# EUROPEAN PATENT APPLICATION

(11) **EP 1 733 861 A2**
(43) Date of publication of application: **20.12.2006**
(21) Application number: 06380166.6
(22) Date of filing: 13.06.2006
(51) Int. Cl.: B29C 45/14, B60G 7/00, F16C 11/06

(54) **Ball joint device, manufacturing process and apparatus**

(30) Priority: 14.06.2005 EP 05380127; 08.06.2006 EP 06380155
(71) Applicant: Industria Auxiliar Alavesa, S.A. (Inauxa), 01470 Amurrio (Alava) (ES)
(72) Inventor: Morales Arnaez, Agustin, 48990 Getxo (ES)
(74) Representative: Carvajal y Urquijo, Isabel

(57) **Abstract**

The invention relates to a device, a process and an apparatus for manufacturing a ball joint device having a ball joint and a casing (1). The casing (1) has a housing (10) for housing the ball joint (2), said housing (10) being configured so as to allow a sliding movement of the first ball joint portion (21) in the housing (10). The apparatus has: containment devices (100) for defining a cavity (110) between the surface to be over-injected and the containment devices (100); entrance devices (200) in the containment devices (100), so that the over-injection product can be introduced in the cavity (110).

## Description

### Field of the Invention

The invention relates to a ball joint device of the type used in automotion, to the manufacturing process of said ball joint device as well as the apparatus wherein the device is manufactured according to the process.

### Background of the Invention

Various embodiments describing the ball joint devices are known in the state of the art.

Nevertheless, the embodiments proposed in the state of the art require a precise adjustment both in the manufacture and in the later assembly of the components of the device. This high degree of precision in the manufacture is necessary because it could even happen that the assembly is not possible if the tolerances of the components are too wide or if, even in the event that they are more restrictive, the manufactured pieces do not comply with said design tolerances; these tolerances will also have a repercussion in the performance of the device.

The ball joint devices with unsuitable tolerances cause a series of inadmissible defects. These defects, in addition to being observable in a recently manufactured device, entail a premature deterioration of the device, shorten its working life and affect the use of the device.

Another feature that the ball joint devices must have is tightness. The tightness must be assured through the adjustment of the components themselves of the ball joint, the design and manufacture tolerances of said components yet again being important, such as through the use of auxiliary elements. These auxiliary elements are usually dust seals with their corresponding retaining or closing elements joining said dust seals with the remaining components of the ball joint device.

Another additional feature which the ball joint devices must have is modularity, this being understood as the ability to form a module which is integrated in a system of which said ball joint device forms part. The devices known in the state of the art have a design and construction which do not facilitate this ability to be integrated in a system in a manner that can be easily adapted to different systems because they require the system itself to be modified for this.

### Description of the Invention

The present invention proposes a ball joint device, a process for manufacturing said ball joint device and an apparatus in which the ball joint device is manufactured by said process solving the drawbacks present in the state of the art set forth previously.

The design of the joining means and the areas in contact of the components of the ball joint device in the joining surfaces assures the tightness required in this type of devices.

The relation between the casing and the seating also allows the casing to be designed such that it can be adapted to different applications according to the system in which the ball joint device is going to be incorporated.

The present invention also relates to the manufacturing process of a joining and stress-transmitting element or link or compass including the present ball joint device. The joining elements manufactured according to the present invention, the material forming the arm or link is over-injected on the previously manufactured ball joint device, in contrast to the usual manufacturing practice, wherein the arm or link is formed first and afterwards a ball joint device or other component is coupled to the ends of the arm.

Given that the over-injected material cools and ends up solidifying on the ball joint by means of the manufacturing process of the invention, there is always an adjustment between the bowl and the ball joint, therefore the dimensional tolerances as regards the diameter of the ball joint are not as demanding. This also allows lowering the manufacturing costs of the ball joint.

The manufacturing process of the invention also allows manufacturing the channel for the dust seal in the same over-injection operation.

The device of the invention also allows any type of material for the over-injection as long as said material is compatible, or does not damage the ball joint. To that respect, the more resistant the material of the ball joint, the greater the reinforcement of the material of the bowl or housing of the head of the ball joint.

According to a first aspect, the invention describes a ball joint device comprising:
a ball joint comprising a first substantially spherical ball joint portion or head and a second ball joint portion having a rod shape;
a casing;
characterized in that:
the casing comprises:
   a housing for housing the first ball joint portion, said housing being configured so
   as to allow sliding movement of the first ball joint portion in said housing;
   an opening configured so as to allow the first ball joint portion to be introduced in said housing.

In the device of the invention, the casing can further comprise a plurality of channels in an inner surface of the housing, said channels being configured so as to allow distribution of a lubricant between the first ball joint portion and the inner surface of the housing.

Additionally, the invention can further comprise a dust seal for protecting the ball joint device. The invention may also have a first sealing ring so as to clamp a first end of the dust seal to the ball joint.

Likewise, the dust seal can further comprise a plurality of ring-shaped grooves acting as a labyrinthine seal on a contact surface between the first end and the ball joint so as to assure tightness between the dust seal and the ball joint.

On the other hand, the device of the invention can comprise clamping means to clamp a second end of the dust seal, said clamping means comprising:
a perimetral ring-shaped groove in the casing;
a second sealing ring for removably fixing the second end of the dust seal to the casing;
for:
assuring tightness between the casing and dust seal;
assuring anchoring of the dust seal to the casing.

According to the invention, the casing can be of a material selected from:
thermoplastic plastic;
thermosetting plastic;
composite material of plastic matrix;
molten ferric material;
wrought ferric material;
welded ferric material;
aluminium;
magnesium;
and combinations thereof.

The casing can comprise a body formed by a plurality of pieces.

In the device of the invention:
the second bearing portion is of steel;
the first bearing portion or head can be of a material selected from:
   steel;
   thermosetting plastic;
   alloyed aluminum;
   plastic;
and combinations thereof.

On the other hand, the dust seal can be of an elastomeric material selected from:
natural rubber;
synthetic rubber;
plastic;
injectable polyurethane;
   and combinations thereof.

Likewise, the sealing rings can be of a material selected from:
steel;
stainless steel;
natural rubber;
synthetic rubber;
plastic;
polyurethane;
   and combinations thereof.

A second aspect of the invention refers to the process for manufacturing by over-injection the previously described device:
by means of an apparatus for over-injecting on an outer surface to be over-injected
of a bearing, an over-injection product in order to obtain a ball joint device.

Said apparatus can comprise:
containment means configured to define a cavity between the surface to be over-injected and said containment means;
entrance means located in the containment means, for introducing the over-injection product in the cavity;
   whereas the process can comprise the following steps:
   i) placing the ball joint in a first mould;
   ii) displacing the first mould and a second mould to an over-injection position in which the two moulds form the containment means and define a cavity wherein an over-injection product is over-injected to form the ball joint device of plastic material on the ball joint;
   iii) displacing the first mould and the second mould to a demoulding position in
which the ball joint device is removed.

The process can further comprise, in the over-injection position, the steps:
a) generating a vacuum in the cavity through connecting means by vacuum-generating means;
b) introducing the over-injection product in the cavity through entrance means by introduction means;
c) generating overpressure in the cavity through connecting means by overpressure-generating means in order to obtain a ball joint device.

A third aspect of the invention refers to an apparatus for manufacturing the device by means of the process previously described, wherein said apparatus further comprises coupling means for:
coupling the containment means to the surface to be over-injected;
assuring tightness between the containment means and the surface to be over-injected, adapting the shape of the containment means to the surface to be over-injected.

### Brief Description of the Drawings

A series of drawings will be briefly described below which will aid in better understanding the invention and which are expressly related with an embodiment of said invention set forth as a non-limiting example of the same.

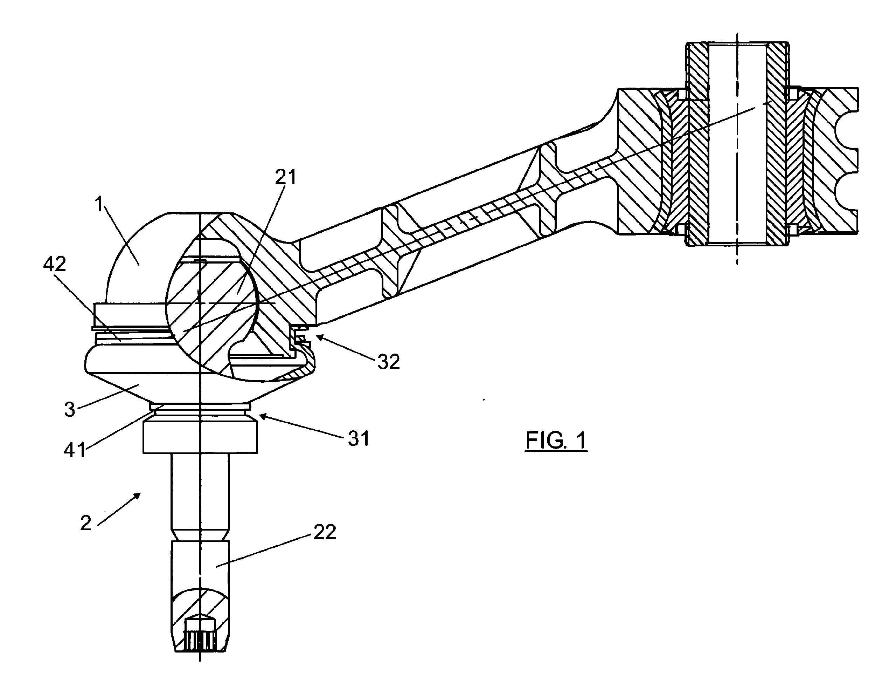

Figure 1 is a sectional view of the device of the invention showing the different assembled components.

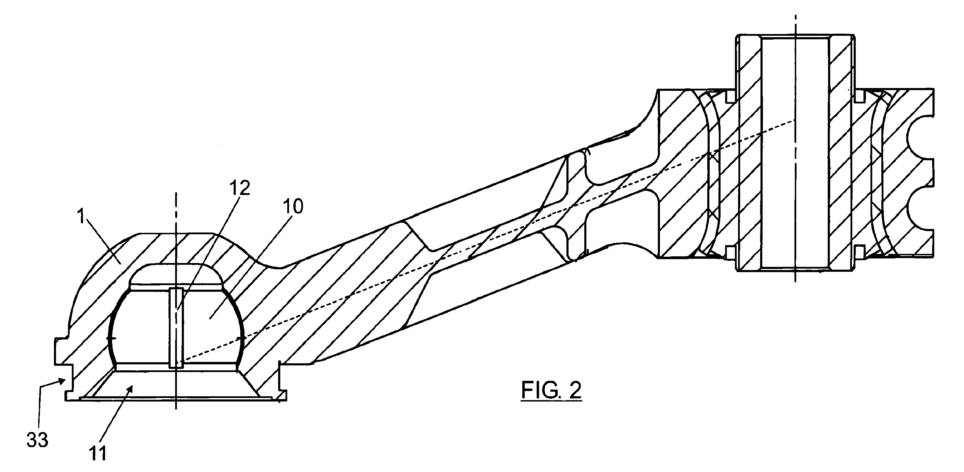

Figure 2 is a sectional view of the device of the invention showing the housing of the bearing inside the casing.

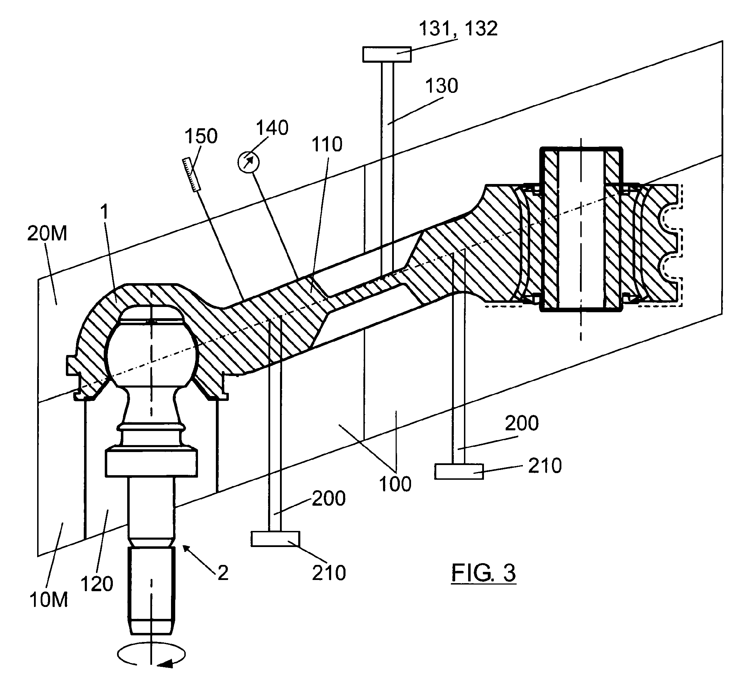

Figure 3 is a sectional view of the apparatus of the invention showing a ball joint device of the invention.

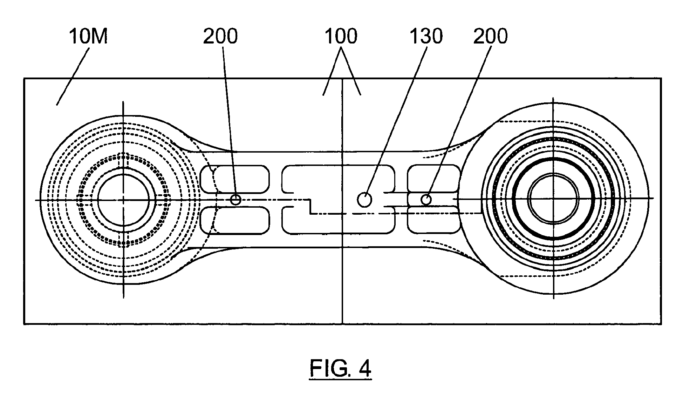

Figure 4 is a plan view of the apparatus of the invention showing a ball joint device of the invention.

### Description of a Preferred Embodiment of the Invention

A preferred embodiment of the invention is described below with the help of drawings. Thus, according to the embodiment, the ball joint device can comprise:
a ball joint 2 comprising a first substantially spherical ball joint portion 21 and a second ball joint portion 22 having a rod shape;
a casing 1;
characterized in that:
the casing 1 comprises:
   a housing 10 for housing the first ball joint portion 21, said housing 10 being configured so as to allow sliding movement of the first ball joint portion 21 in said housing 10;
   an opening 11 configured so as to allow the first ball joint portion 21 to be introduced in said housing 10.

The casing 1 can further comprise a plurality of channels 12 in an inner surface of the housing 10, said channels 12 being configured so as to allow distribution of a lubricant between the first ball joint portion 21 and the inner surface of the housing 10.

An embodiment of the invention can further comprise a dust seal 3 for protecting the ball joint device. In this case, the device of the invention can further comprise:
a first sealing ring 41 so as to clamp a first end 31 of the dust seal 3 to the ball joint 2.

The dust seal 3 can further comprise a plurality of ring-shaped grooves acting as a labyrinthine seal on a contact surface between the first end 31 and the ball joint 2 so as to assure tightness between the dust seal 3 and the ball joint 2.

The device of the invention can further comprise clamping means to clamp a second end 32 of the dust seal 3, said clamping means comprising:
a perimetral ring-shaped groove 33 in the casing 1;
a second sealing ring 42 for removably fixing the second end 32 of the dust seal 3 to the casing 1;
   for:
   assuring tightness between the casing 1 and dust seal 3;
   assuring anchoring of the dust seal 3 to the casing 1.

The casing 1 can be of a material selected from:
thermoplastic plastic;
thermosetting plastic;
composite material of plastic matrix;
molten ferric material;
wrought ferric material;
welded ferric material;
aluminium;
magnesium;
   and combinations thereof.

It is also possible that the material of the housing for the first ball joint portion or head is more resistant/harder than the material of the rest of the casing. To that end, a first hard material can be injected to form the housing, by way of an anti-wear surface hardening layer and a second "structural" material to form the body of the casing. As an alternative, or even as a complement to the injection of the first hard material, a "post-injection" surface treatment can be given to the housing.

The body of the casing 1 can be formed by a plurality of pieces.

In the device of the invention:
the second bearing portion 22 can be of steel;
the first bearing portion 21 can be of a material selected from: steel;
   thermosetting plastic;
   alloyed aluminum;
   plastic;
and combinations thereof.

On one hand, the dust seal 3 can be of an elastomeric material selected from:
natural rubber;
synthetic rubber;
plastic;
injectable polyurethane;
   and combinations thereof.

On the other hand, the sealing rings 41, 42 can be of a material selected from:
steel;
stainless steel;
natural rubber;
synthetic rubber;
plastic;
polyurethane;
   and combinations thereof.

A second aspect of the invention refers to the process for manufacturing by over-injection the previously described device:
by means of an apparatus for over-injecting on an outer surface to be over-injected of a bearing 2, an over-injection product in order to obtain a ball joint device.

Said apparatus can comprise:
containment means 100 configured to define a cavity 110 between the surface to be over-injected and said containment means 100;
entrance means 200 located in the containment means 100, for introducing the over-injection product in the cavity 110;
whereas the process can comprise the following steps:
i) placing the ball joint 2 in a first mould 10M;
ii) displacing the first mould 10M and a second mould 20M to an over-injection position in which the two moulds 10M, 20M form the containment means 100 and define a cavity 110 wherein an over-injection product is over-injected to form the ball joint device of plastic material on the ball joint 4;
iii) displacing the first mould 10M and the second mould 20M to a demoulding position in which the ball joint device is removed.

The process can further comprise, in the over-injection position, the steps:
a) generating a vacuum in the cavity 110 through connecting means 130 by vacuum-generating means 131;
b) introducing the over-injection product in the cavity 110 through entrance means 200 by introduction means 210;
c) generating overpressure in the cavity 110 through connecting means 130 by overpressure-generating means 132 in order to obtain a ball joint device.

The vacuum-generating step a) can comprise:
a1) reaching a first pressure P1 comprised between 2500Pa and 25kPa in the cavity 110 for a first time t1 comprised between 1 s and 120s;
a2) ending step a) con with a second pressure P2 comprised between 2500Pa and 25kPa in the cavity 110 for a second time t2 comprised between 1 s and 120s.

The process of the invention can further comprise a prior sub-step a0) for reaching a prior temperature T0 comprised between 20°C and 120°C in the outer surface to be over-injected.

The step b) of over-injection material introduction can comprise:
b1) introducing said material in the cavity which is at a first temperature T1 comprised between 100 °C and 400 °C for a third time t3 comprised between 1 s and 120s;
b2) ending step b) with a third pressure P3 comprised between 2 MPa and 100 MPa in the cavity 110 for a fourth time t4 comprised between 1 s and 120s.

The step c) of overpressure generation can comprise:
c1) starting with a fourth pressure P4 comprised between 2 MPa and 100 MPa in the cavity 110 for a fifth time t5 comprised between 1 s and 120s;
c2) ending step c) with a fifth pressure P5 comprised between 2 MPa and 100 MPa in the cavity 110.

The process of any part of the invention can further comprise previously drying the surface to be over-injected.

The previous drying step can comprise reaching a drying temperature T'∅ comprised between 20 °C and 150 °C in the surface to be over-injected for a drying time t'0 comprised between 1 s and 120s.

The process of the invention can also comprise subsequently curing the over-injected surface.

The curing step can comprise reaching a subsequent temperature Tn comprised between 20°C and 150 °C in the over-injected surface for a subsequent time comprised between 1 s and 120s.

A third aspect of the invention refers to an apparatus for manufacturing the previously described device by means of the also previously described process wherein said apparatus further comprises coupling means 120 for:
coupling the containment means 100 to the surface to be over-injected;
assuring tightness between the containment means 100 and the surface to be over-injected; adapting the shape of the containment means 100 to the surface to be over-injected.

The apparatus can further comprise connecting means 130 located in the containment means 100, to allow generating a pressure selected from vacuum pressure and overpressure in the cavity 110.

Additionally, the apparatus can further comprise:
pressure measuring means 140 located in the containment means 100, for measuring pressure in the cavity 110;
temperature measuring means 150 located in the containment means 100, for measuring a temperature in the cavity 110.

On the other hand, the apparatus can also comprise:
introduction means 210 for introducing the over-injection product in the cavity 110 through the entrance means 200.

Optionally, the apparatus can also comprise:
vacuum-generating means 131 for generating a vacuum pressure in the cavity 110 through the connecting means 130;
overpressure-generating means 132 for generating an overpressure in the cavity 110 through the connecting means 130.

## Claims

1. A ball joint device comprising:
a ball joint (2) comprising a first substantially spherical ball joint portion (21) and a second ball joint portion (22) having a rod shape;
a casing (1);
**characterized in that**:
the casing (1) comprises:
a housing (10) for housing the first ball joint portion (21), said housing (10) being configured so as to allow sliding movement of the first ball joint portion (21) in said housing (10).

2. The device of claim 1, wherein the casing (1) further comprises a plurality of channels (12) in an inner surface of the housing (10), said channels (12) being configured so as to allow distribution of a lubricant between the first ball joint portion (21) and the inner surface of the housing (10).

3. The device of any of claims 1-2 further comprising a dust seal (3) for protecting the ball joint device.

4. The device of claim 3, further comprising:
a first sealing ring (41) so as to clamp a first end (31) of the dust seal (3) to the ball joint (2).

5. The device of claim 4 wherein the dust seal (3) further comprises a plurality of ring-shaped grooves acting as a labyrinthine seal on a contact surface between the first end (31) and the ball joint (2) so as to assure tightness between the dust seal (3) and the ball joint (2).

6. The device of any of claims 3-5 further comprising clamping means to clamp a second end (32) of the dust seal (3), said clamping means comprising:
a perimetral ring-shaped groove (33) in the casing (1);
a second sealing ring (42) for removably fixing the second end (32) of the dust seal (3) to the casing (1);
for:
assuring tightness between the casing (1) and dust seal (3);
assuring anchoring of the dust seal (3) to the casing (1).

7. The device of any of claims 1-6 wherein the casing (1) is of a material selected from:
thermoplastic plastic;
thermosetting plastic;
composite material of plastic matrix;
molten ferric material;
wrought ferric material;
welded ferric material;
aluminium;
magnesium;
and combinations thereof.

8. The device of any of claims 1-7 wherein the casing (1) comprises a body formed by a plurality of pieces.

9. The device of any of claims 1-8 wherein:
the second bearing portion (22) is of steel;
the first bearing portion (21) is of a material selected from:
steel;
thermosetting plastic;
alloyed aluminum;
plastic;
and combinations thereof.

10. The device of any of claims 3-9 wherein the dust seal (3) is of an elastomeric material selected from:
natural rubber;
synthetic rubber;
plastic;
injectable polyurethane;
and combinations thereof.

11. The device of claim 6 wherein the sealing rings (41, 42) are of a material selected from:
steel;
stainless steel;
natural rubber;
synthetic rubber;
plastic;
polyurethane;
and combinations thereof.

12. A process for manufacturing by over-injection the device of any of claims 1-11:
by means of an apparatus for over-injecting on an outer surface to be over-injected of a ball joint (2), an over-injection product in order to obtain a ball joint device, said apparatus comprising:
containment means (100) configured to define a cavity (110) between the surface to be over-injected and said containment means (100);
entrance means (200) located in the containment means (100), so that the over-injection product can be introduced in the cavity (110);
**characterized in that** said process comprises the steps of:
i) placing the ball joint (2) in a first mould (10M);
ii) displacing the first mould (10M) and a second mould (20M) to an over-injection position in which the two moulds (10M, 20M) form the containment means (100) and define a cavity (110) wherein an over-injection product is over-injected to form the ball joint device of plastic material on the ball joint (4);
iii) displacing the first mould (10M) and the second mould (20M) to a demoulding position in which the ball joint device is removed.

13. The process of claim 12, **characterized in that** in the over-injection position it further comprises the steps of:
a) generating a vacuum in the cavity (110) through connecting means (130) by vacuum-generating means (131);
b) introducing the over-injection product in the cavity (110) through entrance means (200) by introduction means (210);
c) generating overpressure in the cavity (110) through connecting means (130) by overpressure-generating means (132) in order to obtain a ball joint device.

14. The process of claim 13, **characterized in that** the vacuum-generating step a) comprises:
a1) reaching a first pressure P1 comprised between 2500Pa and 25kPa in the cavity (110) for a first time t1 comprised between 1s and 120s;
a2) ending step a) con with a second pressure P2 comprised between 2500Pa and 25kPa in the cavity (110) for a second time t2 comprised between 1 s and 120s.

15. The process of any of claims 13-14, **characterized in that** it further comprises a prior sub-step a0) for reaching a prior temperature T0 comprised between 20°C and 120°C in the outer surface to be over-injected.

16. The process of any of claims 13-15, **characterized in that** the step b) of over-injection material introduction comprises:
b1) introducing said material in the cavity which is at a first temperature T1 comprised between 100 °C and 400 °C for a third time t3 comprised between 1 s and 120s;
b2) ending step b) with a third pressure P3 comprised between 2 MPa and 100 MPa in the cavity (110) for a fourth time t4 comprised between 1 s and 120s.

17. The process of any of claims 13-16, **characterized in that** the step c) of overpressure generation comprises:
c1) starting with a fourth pressure P4 comprised between 2 MPa and 100 MPa in the cavity (110) for a fifth time t5 comprised between 1s and 120s;
c2) ending step c) with a fifth pressure P5 comprised between 2 MPa and 100 MPa in the cavity (110).

18. The process of any of claims 13-17, **characterized in that** it further comprises previously drying the surface to be over-injected.

19. The process of claim 18, **characterized in that** the previous drying step comprises reaching a drying temperature T'0 comprised between 20 °C and 150 °C in the surface to be over-injected for a drying time t'0 comprised between 1 s and 120s.

20. The process of any of claims 13-19, **characterized in that** it further comprises subsequently curing the over-injected surface.

21. The process of claim 20, **characterized in that** the curing step comprises reaching a subsequent temperature Tn comprised between 20°C and 150 °C in the over-injected surface for a subsequent time comprised between 1 s and 120s.

22. An apparatus for manufacturing the device of any of claims 1-11 by means of the process of any of claims 12-21, wherein said apparatus further comprises coupling means (120) for:
coupling the containment means (100) to the surface to be over-injected;
assuring tightness between the containment means (100) and the surface to be over-injected; adapting the shape of the containment means (100) to the surface to be over-injected.

23. The apparatus of claim 22 further comprising connecting means (130) located in the containment means (100), to allow a pressure selected from vacuum pressure and overpressure to be generated in the cavity (110).

24. The apparatus of any of claims 22-23 further comprising:
pressure measuring means (140) located in the containment means (100), for measuring the pressure in the cavity (110);
temperature measuring means (150) located in the containment means (100), for measuring the temperature in the cavity (110).

25. The apparatus of any of claims 22-24 further comprising:
introduction means (210) for introducing the over-injection product in the cavity (110) through the entrance means (200).

26. The apparatus of any of claims 22-25 further comprising:
vacuum-generating means (131) for generating a vacuum pressure in the cavity (110) through the connecting means (130);
overpressure-generating means (132) for generating an overpressure in the cavity (110) through the connecting means (130).
